# EUROPEAN PATENT APPLICATION

(11) **EP 3 187 348 A1**
(43) Date of publication of application: **05.07.2017**
(21) Application number: 15835333.4
(22) Date of filing: 12.08.2015
(51) Int. Cl.: B60J 5/04, E05C 17/22

(54) **VEHICLE DOOR OPENING DEGREE ADJUSTMENT DEVICE**

(30) Priority: 29.08.2014 JP 2014175773
(71) Applicant: Aisin Seiki Kabushiki Kaisha, Kariya-shi, Aichi 448-8650 (JP)
(72) Inventor: SEKI, Tomokazu, Kariya-shi Aichi 4488650 (JP); SUZUKI, Shintaro, Kariya-shi Aichi 4488650 (JP)
(74) Representative: TBK
(86) International application number: PCT/JP2015/004034
(87) International publication number: WO 2016/031161

(57) **Abstract**

Then opening degree adjustment device for a vehicle door includes a door check including a pressing member and being fixed to a vehicle door mounted to a vehicle body; a check link including a sliding surface to be pressed by the pressing member, one end being supported on the vehicle body so as to be pivotable, and another end having a stopper member mounted thereon, the check link being movable relative to the door check within a predetermined movable range of the check link between the one end of the check link and the another end of the check link under a state in which the sliding surface is pressed by the pressing member; and an opening degree adjustment block including a first checking region configured to restrict movement of the stopper member.

## Description

### Technical Field

The present invention relates to an opening degree adjustment device, which is configured to adjust an opening degree of a vehicle door of a vehicle such as a passenger car.

### Background Art

In a case where there is no sufficient space between a vehicle and an object adjacent to the vehicle when a vehicle is stopped, it is necessary to prevent a vehicle door from coming into contact with the object. In such a case, when an occupant gets off the vehicle, the occupant pulls a vehicle door toward an inner side of the vehicle to prevent sudden opening of the vehicle door, and opens the vehicle door so as to prevent the vehicle door from coming into contact with the object adjacent to the vehicle. Accordingly, it is conceivable to provide the vehicle door with a maximum opening degree restricting function capable of setting a maximum opening degree of the vehicle door.

### Citation List

### Patent Literature

PTL 1: Japanese Patent Application Laid-Open No. 2003-118369

### Summary of Invention

### Technical Problem

Even in a case where the vehicle door is provided with the maximum opening degree restricting function, a simple way of setting the opening degree of the vehicle door is to allow a driver himself/herself to recognize a distance between the vehicle and the object adjacent to the vehicle through the senses and manually set the maximum opening degree. At this time, visual measurement of the distance by an operator of the vehicle door is imprecise. Thus, in some cases, a maximum opening angle by the maximum opening degree restricting function of the vehicle door is set to a larger opening angle. The vehicle door has a certain weight. Thus, when the operator gets on or off the vehicle in that state, the vehicle door is easily opened even with a slight force, with the result that the vehicle door comes into contact with the object adjacent to the vehicle. Accordingly, in this state, it is preferred that the vehicle door be urged in a direction of closing the vehicle door. In this context, in Patent Literature 1, there is disclosed a door checker for an automobile, which is configured to prevent a door from being suddenly opened to an opening limit against intention of a user. However, the door checker has been made to achieve an object to prevent the door from being suddenly opened within an opening range from a middle opening degree to the opening limit, and there is no disclosure as to a configuration for restricting a maximum opening amount of the vehicle door during popping up of the vehicle door as initial operation. In order to achieve safe popping up of the vehicle door, it is preferred that the maximum opening amount of the vehicle door be restricted.

### Solution to Problem

According to one embodiment of the present invention, there is provided an opening degree adjustment device for a vehicle door, including: a door check including a pressing member and being fixed to a vehicle door; a check link including a sliding surface to be pressed by the pressing member, one end being supported on the vehicle body so as to be pivotable, and another end having a stopper member mounted thereto, the check link being movable relative to the door check within a predetermined movable range of the check link between the one end of the check link and the another end of the check link under a state in which the sliding surface is pressed by the pressing member; and an opening degree adjustment block including a first checking region configured to restrict movement of the stopper member in a direction of the one end of the check link so as to enable the check link to move relatively to the door check within a range reduced from the predetermined movable range by a first length.

### Advantageous Effects of Invention

Predetermined slopes are formed on the check link to always urge the vehicle door in the direction of closing the vehicle door. Thus, even when there is no sufficient space between the vehicle and the object adjacent to the vehicle, the maximum opening amount can be restricted, and the vehicle door is less liable to collide with the object.

### Brief Description of Drawings

FIG. 1 is a view for illustrating a vehicle under a state in which a vehicle door is opened, as viewed from a rear side of the vehicle.
FIG. 2A is a view for illustrating a motion of a check link under a state in which the vehicle door is closed, as viewed from the upper side of the vehicle.
FIG. 2B is a view for illustrating a motion of the check link under a state in which the vehicle door is opened, as viewed from the upper side of the vehicle.
FIG. 3 is a view for illustrating opening angles of the vehicle door at respective positions on the check link according to a vehicle door opening degree adjustment device of the present invention.
FIG. 4A is a view for illustrating a relationship between the check link and an opening degree adjustment block in a vehicle door opening/closing adjustment device according to the present invention under a second state in which a predetermined movable range of the check link is reduced by a first length.
FIG. 4B is a view for illustrating a relationship between the check link and the opening degree adjustment block in the vehicle door opening/closing adjustment device according to the present invention under a third state in which the predetermined movable range of the check link is reduced by a second length.
FIG. 4C is a view for illustrating a relationship between the check link and the opening degree adjustment block in the vehicle door opening/closing adjustment device according to the present invention when the vehicle door is fully opened under a first state in which an opening degree adjustment block retreats.
FIG. 4D is a view for illustrating a relationship between the check link and the opening degree adjustment block in the vehicle door opening/closing adjustment device according to the present invention when the poping up operation of the vehicle door is finished under the first state in which the opening degree adjustment block retreats.

### Description of Embodiments

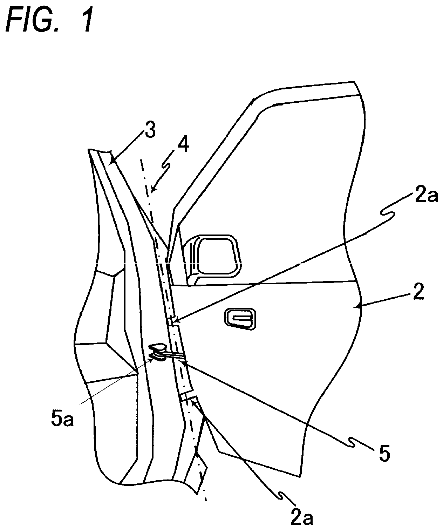

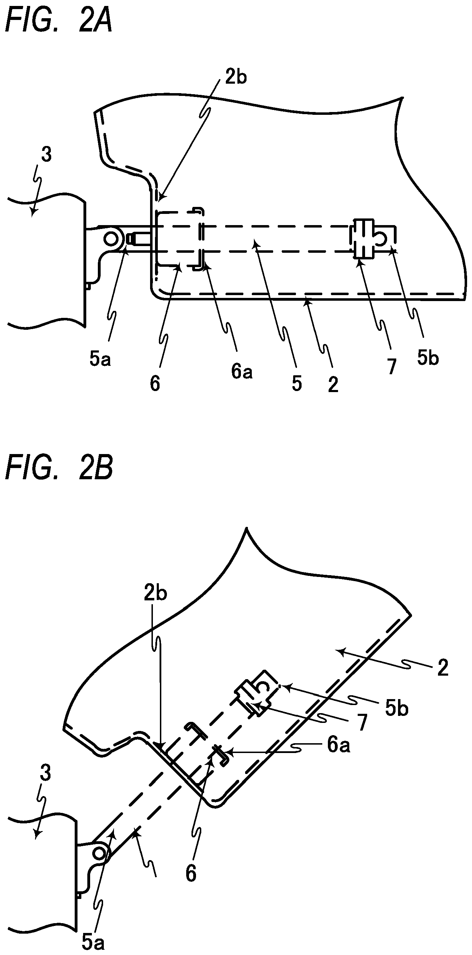

Now, with reference to FIG. 1 to FIG. 3 and FIG. 4A to FIG. 4D, an opening degree adjustment device for a vehicle door according to an embodiment of the present invention is described. FIG. 1 is a view for illustrating a state in which a vehicle door 2 is opened, as viewed from a rear side of a vehicle 1. FIG. 2A is a view for illustrating a check link 5 and a door check 6 under a state in which the vehicle door 2 is closed. FIG. 2B is a view for illustrating motions of the check link 5 and the door check 6 under a state in which the vehicle door 2 is opened.

In general, the vehicle door 2 is supported on a body 3 at hinge portions 2a, which are arranged on a front side of the vehicle door 2, so as to be pivotable about a pivot axis 4. In order to adjust an opening degree of the door, the check link 5 is mounted in the vicinity of the hinge portions 2a of the vehicle door 2.

FIG. 2A is a view for illustrating the check link 5 under the state in which the vehicle door 2 is closed, and FIG. 2B is a view for illustrating the check link 5 under the state in which the vehicle door 2 is opened. The check link 5 has an elongated shape, and one end 5a of the check link 5 is supported on the body 3 so as to be pivotable. Another end 5b of the check link 5, which is arranged on a side opposite to the one end 5a supported on the body 3, is inserted into the vehicle door 2 through a hole formed in a wall surface of the vehicle door 2 on a side on which the hinge portions 2a of the vehicle door 2 are arranged. A stopper member 7 having a flange shape is mounted to another end of the check link 5.

The door check 6 having a through-hole formed therein is mounted on an inner wall 2b of the vehicle door 2. The check link 5 is inserted through the through-hole of the door check 6 so that the door check 6 is positioned between the one end 5a and the another end 5b of the check link 5. Pressing members 8 each configured to press a surface of the check link 5 are arranged inside the door check 6. As illustrated in FIG. 2B, when the vehicle door 2 is opened, the check link 5 is pivoted with respect to the body 3. With this, a position of the door check 6 is shifted relative to the check link 5, and the pressing members 8 of the door check 6 can move relative to the check link 5 within a predetermined movable range between the one end 5a and the another end 5b of the check link 5 while pressing the check link 5. Meanwhile, when the vehicle door is closed, the door check 6 and the pressing members 8 are returned to original states through reverse procedures.

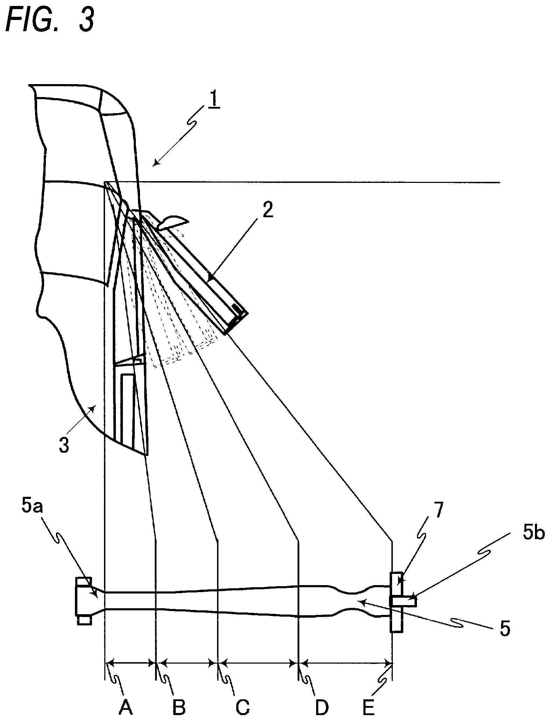

As illustrated in FIG. 3, opening angles of the vehicle door 2 can be set in accordance with positions of the door check 6 within the check link 5. FIG. 3 is a view for illustrating the opening angles of the vehicle door 2 and positions A to E of the door check 6 in an extending direction of the check link 5. When the door check 6 is at the position A, the vehicle door 2 is in the closed state. When the door check 6 is shifted from the position A to the position B, the vehicle door 2 is opened (popped up) under a state in which only a resilient force of a rubber weather strip arranged between the vehicle door 2 and the body 3 is exerted. When the door check 6 is at the position B, the vehicle door 2 is in a spontaneous open state with a maximum opening degree under no load. When the door check 6 is at the position C, the vehicle door 2 is in the open state at a minimum opening angle enabling an occupant to get on or off the vehicle. When the door check 6 is at the position D, the vehicle door 2 is opened at an opening angle enabling an occupant to easily get on or off the vehicle. When the door check 6 is at the position E, the vehicle door 2 is fully opened at a maximum angle. That is, when the door check 6 is at the position closer to the stopper member 7, that is, on the another end 5b side of the check link 5, the vehicle door 2 is in a more open state. When the door check 6 is at the position more distant from the stopper member 7, that is, on the one end 5a side of the check link 5, the vehicle door 2 is in a more closed state.

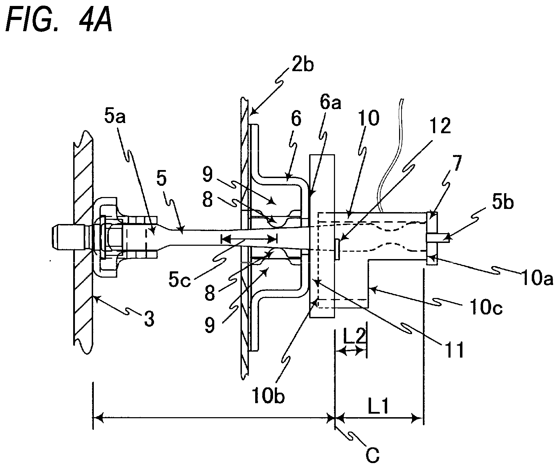

With reference to FIG. 4A to FIG. 4D, the opening degree adjustment device for a vehicle door, which is configured to achieve the states at the respective positions, is described. FIG. 4A to FIG. 4D are illustrations of the check link 5 and the door check 6. As described above, the one end 5a of the check link 5 is retained on the body 3 so as to be pivotable, and the stopper member 7 is mounted on the another end 5b of the check link 5. Elastic members 9 are arranged inside the door check 6. The check link 5 includes one sliding surface extending in the extending direction of the check link 5. Each of the elastic members 9 urges the pressing member 8 so as to cause the pressing member 8 to press the sliding surface of the check link 5. As illustrated in FIG. 4A to FIG. 4D, it is preferred that two sliding surfaces be arranged on the check link 5 so as to be opposite to each other. The pair of elastic members 9 and the pair of pressing members 8 are arranged inside the door check 6 so as to press and sandwich the two sliding surfaces from both sides of the check link 5.

The door check 6 is mounted on an inner surface 2b of the vehicle door 2 so that a pressing direction of the pressing member 8 is substantially perpendicular to a direction in which the check link 5 extends. The door check 6 includes a regulation surface 6a arranged on the another end side of the check link 5 so as to be perpendicular to the extending direction of the check link 5. The stopper member 7 includes a surface parallel to the regulation surface 6a.

The opening degree adjustment device for a vehicle door includes an opening degree adjustment block 10. The opening degree adjustment block 10 is retained by a retaining bracket 11 mounted on the regulation surface 6a of the door check 6. The opening degree adjustment block 10 has a predetermined length in the extending direction of the check link 5, and can be fitted on the check link 5. The opening degree adjustment block 10 includes a tab 12 and a surface that are capable of coming into abutment against the retaining bracket 11 and the stopper member 7, respectively, when the opening degree adjustment block 10 is fitted on the check link 5. For example, in this embodiment, the opening degree adjustment block 10 includes a first checking region and a second checking region. When the opening degree adjustment block 10 is fitted on the check link 5, the first checking region is defined by a pair of abutment surfaces so as to determine a movement restriction range having a first length (L1) in the extending direction of the check link 5, and the second checking region is defined by another pair of abutment surfaces so as to determine a movement restriction range having a second length (L2) in the extending direction of the check link 5. For example, a range between a long-side end portion 10a of the opening degree adjustment block 10 on the another end 5b side of the check link 5 positioned on the stopper member 7 side when the opening degree adjustment block 10 is fitted on the check link 5, and the tab 12 arranged away from the long-side end portion 10a of the opening degree adjustment block 10 by a predetermined distance can be defined as the first movement restriction range having the first length (L1). Meanwhile, for example, a range between a short-side end portion 10c of the opening degree adjustment block 10 on the another end 5b side of the check link 5 positioned on the stopper member 7 side when the opening degree adjustment block 10 is fitted on the check link 5, and the tab 12 of the opening degree adjustment block 10 can be defined as the second movement restriction range having the second length (L2). Herein, the second length (L2) is defined as a length smaller than the first length (L1).

A position of the opening degree adjustment block 10 can be controlled, for example, in such a manner that a user sets a setting device such as a dial arranged on the vehicle door 2. Through the setting, the opening degree adjustment block 10 is controlled so as to be movable among a first state in which the opening degree adjustment block 10 retreats to a position away from the check link, a second state in which the first checking region of the adjusting block 10 is fitted on a portion of the check link 5 within a predetermined movable range, and a third state in which the second checking region of the adjusting block 10 is fitted on a portion of the check link 5 within the predetermined movable range. In the second state and the third state, the first checking region and the second checking region have the following relationship. That is, when the first checking region determines the first movement restriction range having the first length (L1), the stopper member 7 comes into abutment on the long-side end portion of the opening degree adjustment block 10, whereas the tab 12 of the opening degree adjustment block comes into abutment on the retaining bracket. As a result, the opening degree adjustment block 10 functions so as to restrict movement of the check link 5 in a direction of the one end 5a of the check link 5. Further, similarly, when the second checking region determines the second movement restriction range having the second length (L2), the stopper member 7 comes into abutment against the short-side end portion 10c of the opening degree adjustment block 10, whereas the tab 12 of the opening degree adjustment block comes into abutment against the retaining bracket. As a result, the opening degree adjustment block 10 functions so as to restrict movement of the check link 5 in the direction of the one end 5a of the check link 5. Therefore, as compared to the first state in which the check link 5 can move relative to the door check 6 within the predetermined movable range because the opening degree adjustment block 10 is not fitted on the check link 5, in the second state, the check link 5 can move relative to the door check 6 within a range reduced from the predetermined movable range by the first length (L1). Further, in the third state, the check link 5 can move relative to the door check 6 within a range reduced from the predetermined movable range by the second length (L2) smaller than the first length (L1).

In the above description, the range between the long-side end portion 10a and the tab 12 of the opening degree adjustment block 10 is set as the first movement restriction range having the first length (L1), and the range between the short-side end portion 10c and the tab 12 of the opening degree adjustment block 10 is set as the second movement restriction range having the second length (L2). However, the movement restriction ranges can be defined in various manners. For example, instead of the tab 12, an end portion 10b of the opening degree adjustment block 10 on the one end 5a side of the check link 5 may be used. That is, a range between the long-side end portion 10a of the opening degree adjustment block 10 and the end portion 10b of the opening degree adjustment block 10 on the one end 5a side of the check link 5 may be defined as the movement restriction range having the first length (L1). Similarly, a range between the short-side end portion 10c of the opening degree adjustment block 10 and the end portion 10b of the opening degree adjustment block 10 on the one end 5a side of the check link 5 may be defined as the movement restriction range having the second length (L2).

In addition, instead of the configuration in which the short-side end portion 10a of the opening degree adjustment block 10 comes into direct abutment against the stopper member 7, a protrusion or the like may be formed on the check link 5 on the one end 5a side of the check link 5 with respect to the stopper member 7, and the protrusion may come into abutment against the long-side end portion 10a of the opening degree adjustment block 10 or against the short-side end portion 10b of the opening degree adjustment block 10. In the second state and the third state, the protrusion and the opening degree adjustment block 10 may come into abutment against each other so that the opening degree adjustment block 10 may function so as to restrict movement of the check link 5 in the direction of the one end 5a of the check link 5. Further, the end portion 10b of the opening degree adjustment block 10 on the one end 5a side of the check link 5 comes into direct abutment against the retaining bracket 11 so that movement of the opening degree adjustment block 10 is indirectly restricted by the door check 6. Thus, movement of the check link 5 in the direction of the one end 5a of the check link 5 is restricted. However, the end portion 10b of the opening degree adjustment block 10 may come into direct abutment against the regulation surface 6a of the door check 6 so that movement of the opening degree adjustment block 10 may be restricted by the door check 6. Thus, movement of the check link 5 in the direction of the one end 5a of the check link 5 may be restricted.

In any cases, in the second state, the first checking region of the opening degree adjustment block 10 is fitted on a portion of the check link 5 within the predetermined movable range, with the result that the opening degree adjustment block 10 restricts relative movement of the check link 5 in the direction of the another end 5b to the door check 6. With this configuration, the check link 5 can move relative to the door check 6 within a range reduced by the first length (L1) from the predetermined movable range in which the door check 6 is allowed to move relative to the check link 5 in the first state. Further, in the third state, the second checking region of the opening degree adjustment block 10 is fitted on a portion of the check link 5 within the predetermined movable range, with the result that the opening degree adjustment block 10 restricts relative movement of the door check 6 in the direction of the another end 5b of the check link 5. With this configuration, the check link 5 can move relative to the door check 6 within a range reduced by the second length (L2) from the predetermined movable range in which the door check 6 is allowed to move relative to the check link 5 in the first state. That is, geometric shapes of the first checking region and the second checking region of the opening degree adjustment block 10, the first length (L1), portions determining the first length (L1), the second length (L2), and portions determining the second length (L2) can be freely set. In the second state, it is only necessary that a relative movable range of the door check 6 to the check link 5 be reduced by the arbitrary first length (L1) from the predetermined movable range in which the door check 6 is allowed to move relative to the check link 5 in the first state. Further, in the third state, it is only necessary that a relative movable range of the door check 6 to the check link 5 be reduced by the second length (L2) from the predetermined movable range in which the door check 6 is allowed to move relative to the check link 5 in the first state.

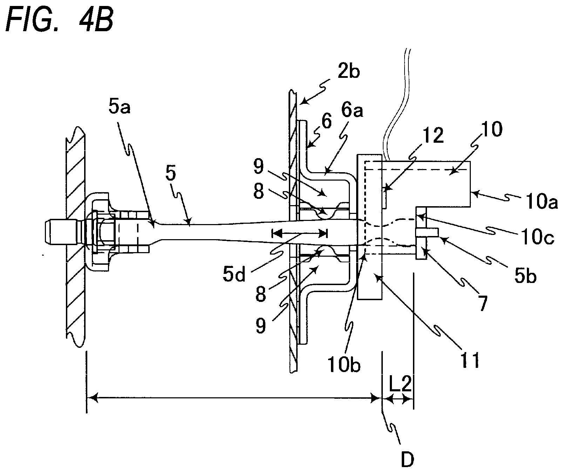

FIG. 4A is an illustration of the second state. In the second state, between the tab 12 and the long-side end portion 10a of the opening degree adjustment block 10, the opening degree adjustment block 10 secures the first length (L1) by which relative movement of the door check 6 to the check link 5 is restricted. That is, the tab 12 configured to restrict movement of the check link 5 is at the position C. The check link 5 and the door check 6 are arranged so that the minimum opening angle of the vehicle door 2 enabling an occupant to get on or off the vehicle is formed when the tab 12 is at the position C. Further, similarly, FIG. 4B is an illustration of the third state. In the third state, between the tab 12 and the short-side end portion 10c of the opening degree adjustment block 10, the opening degree adjustment block 10 secures the second length (L2) that is smaller than the first length (L1) and is a length by which relative movement of the door check 6 to the check link 5 is restricted. That is, the tab 12 configured to restrict movement of the check link 5 is at the position D. It is only necessary to arrange the check link 5 and the door check 6 on the vehicle door 2 and the body 3 so that the opening angle of the vehicle door 2 enabling an occupant to easily get on or off the vehicle is formed when the tab 12 is at the position D.

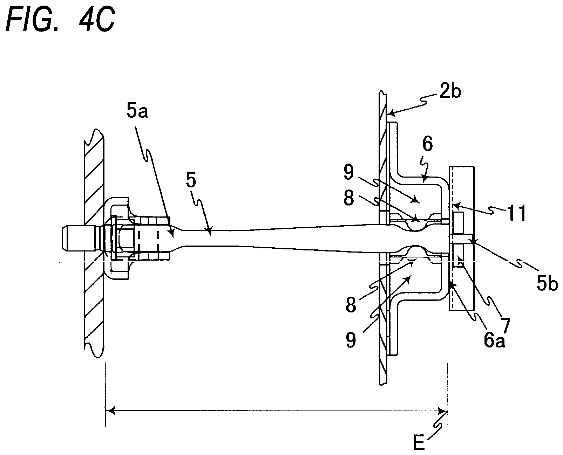

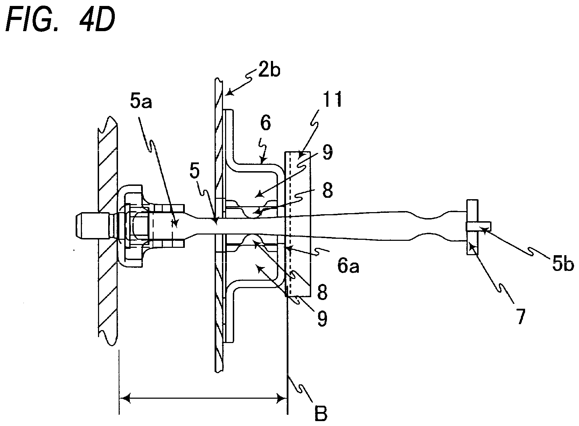

FIG. 4C and FIG. 4D are illustrations of the first state in which the opening degree adjustment block 10 retreats from the check link 5. In this state, FIG. 4C is an illustration of a state in which the vehicle door is most opened, and FIG. 4D is an illustration of a state in which popping up of the vehicle door is finished. In FIG. 4C, a state in which the stopper member 7 is held in abutment on the retaining bracket 11 is illustrated. However, in the state illustrated in FIG. 4C, relative movement of the door check 6 to the check link 5 is restricted by abutment of the stopper member 7 on the retaining bracket 11. However, this is merely an example. A positional relationship between the stopper member 7 and the retaining bracket 11 when the opening degree of the vehicle door is maximum can be freely set based on a relationship between the opening degree of the vehicle door and the length of the check link. Accordingly, the vehicle door can be opened with the maximum opening degree under a state in which the stopper member 7 is not held in abutment against the retaining bracket 11. In this specification, as one example, there is described an example in which the stopper member 7 comes into abutment against the retaining bracket 11 when the vehicle door is opened with the maximum opening degree. It is only necessary to arrange the check link 5 and the door check 6 so that the vehicle door 2 is fully opened at a maximum angle when the stopper member 7 comes into abutment against the retaining bracket 11. Further, it is only necessary to arrange the check link 5 and the door check 6 on the vehicle door 2 and the body 3 so that the vehicle door 2 is fully opened at the maximum angle even under a state in which the regulation surface 6a is not held in abutment against the stopper member 7. An angle of the vehicle door can be set as appropriate in accordance with a corresponding position on the check link 5. In the first state, an interval between a relative position of the door check 6 to the check link 5 under a state in which the vehicle door 2 is fully opened, and a relative position of the door check 6 to the check link 5 under a state in which the vehicle door 2 is fully closed corresponds to a predetermined movable range of the door check 6 with respect to the check link 5. That is, the vehicle door 2 can be freely opened and closed within a range corresponding to the predetermined movable range of the door check 6 with respect to the check link 5.

Now, there is assumed a case where a user of the vehicle operates the vehicle door 2 within a range corresponding to the range between the position D and the position E illustrated in FIG. 3 to get on or off the vehicle. In this case, there is a sufficient space between the vehicle and an object adjacent to the vehicle. Thus, there is no fear in that the vehicle door comes into contact with the object. Meanwhile, in a case where a user operates the vehicle door 2 within a range corresponding to the range between the position C and the position D illustrated in FIG. 3 to get on or off the vehicle, there is no sufficient space between the vehicle and the object adjacent to the vehicle. That is, the vehicle door may come into contact with the object. In this case, an operator of the vehicle door 2 measures a distance between the vehicle and an object adjacent to the vehicle, and adjusts the opening degree of the vehicle door 2 based on the distance. In view of a relationship of the measurement and adjustment to a position of the door check 6 in the extending direction of the check link 5, within the predetermined movable range of the door check 6 with respect to the check link 5, relative movement of the door check 6 to the check link 5 needs to be restricted. Accordingly, an operator fits the opening degree adjustment block 10 on the check link 5 by the setting device. For example, in a case where an operator requires the vehicle door 2 to be slightly opened, that is, opened with a small opening degree, it is necessary to restrict the predetermined movable range of the door check 6 with respect to the check link 5 to a small range. In this case, as described above, the opening degree adjustment block 10 is brought into the second state. That is, the door check 6 is allowed to move relative to the check link 5 within a range reduced from the predetermined movable range by the first movement restriction range having the first length (L1). Further, in a case where the vehicle door 2 is allowed to be opened with a larger opening degree than the above-mentioned small opening degree, but it is desired that the opening angle of the vehicle door 2 be restricted to an angle smaller than the maximum opening angle, the opening degree adjustment block 10 is brought into the third state. That is, the door check 6 is allowed to move relative to the check link 5 within a range reduced from the predetermined movable range by the second movement restriction range having the second length (L2). The first length (L1) is longer than the second length (L2). Accordingly, the movable range of the door check 6 with respect to the check link 5 in the second state is smaller than the movable range of the door check 6 with respect to the check link 5 in the third state.

However, in a case where there is no sufficient space between the vehicle and the object adjacent to the vehicle, in general, an operator sets the opening degree of the vehicle door improperly in some cases because the operator sets the opening degree based on visual measurement of the distance between the vehicle and the object. The operator gets on or off the vehicle while measuring a distance between an end of the vehicle door 2 and the object. In this case, when the vehicle door 2 is urged in a direction of closing the vehicle door 2, collision between the vehicle door 2 and the object adjacent to the vehicle door 2 can be avoided. Thus, this configuration is preferred. Accordingly, the sliding surface of the check link 5 may include a slope (first slope 5c) to be described below. That is, the slope (first slope 5c) is formed so as to slant down to the one end 5a side of the check link 5 from a portion of the check link pressed by the pressing member 8 when relative movement of the check link 5 in the direction of the one end 5a of the check link 5 is restricted by the opening degree adjustment block 10 in the second state. The slope is formed on the sliding surface of the check link 5. Thus, in this state, the pressing member 8 presses the sliding surface of the check link 5, and thus conversely undergoes a reaction force from the slope. Thus, a component of a force of relatively shifting a position of the pressing member 8 to the one end 5a side of the check link 5 is generated, with the result that the vehicle door 2 is always urged in the direction of closing the vehicle door 2. That is, even when an operator brings the opening degree adjustment block 10 into the second state with an intention to adjust the opening degree of the vehicle door 2, the vehicle door 2 is not urged in a direction of opening the vehicle door 2.

Further, the slope may be further extended. That is, another slope (second slope 5d) is formed so as to slant down to the one end 5a side of the check link 5 from a portion of the check link pressed by the pressing member 8 when relative movement of the check link 5 in the direction of the one end 5a of the check link 5 is restricted by the opening degree adjustment block 10 in the third state. Further, the second slope 5d is formed on the sliding surface of the check link 5 so as to be continuous with the first slope 5c formed in the second state. Accordingly, the second slope 5d is a slope slanting from a portion of the check link pressed by the pressing member 8 when relative movement of the check link 5 in the direction of the one end 5a of the check link 5 is restricted by the opening degree adjustment block 10 in the third state, to a portion of the check link pressed by the pressing member in the second state. The second slope 5d is formed on the sliding surface of the check link 5. Thus, even in the third state, the pressing member 8 presses the sliding surface of the check link 5, and thus conversely undergoes a reaction force from the slope. Thus, a component of a force of relatively shifting a position of the pressing member 8 to the one end 5a side of the check link 5 is generated, with the result that the vehicle door 2 is always urged in the direction of closing the vehicle door 2. That is, even when an operator brings the opening degree adjustment block 10 into the third state with an intention to adjust the opening degree of the vehicle door 2, the vehicle door 2 is not urged in the direction of opening the vehicle door 2.

Further, it is only necessary to set the vehicle door 2 so that the vehicle door 2 can be fully opened when the adjusting block 10 is not fitted on the check link 5. In addition, the vehicle door 2 is set so that, when the adjusting block 10 is fitted on the check link 10 to restrict movement of the check link by the second length, the vehicle door 2 can be opened at an angle that is generally used for an occupant to get on or off the vehicle. Further, the vehicle door 2 is set so that, when the adjusting block 10 is fitted on the check link to restrict movement of the check link by the first length, the vehicle door 2 can be opened to a minimum necessary angle for an occupant to get on or off the vehicle.

An angle of the first slope 5c and an angle of the second slope 5d may be equal to or different from each other. In a case where it is desired that a larger urging force be applied in the direction of closing the vehicle door 2 particularly under a state in which the vehicle door 2 is opened at a wider angle, an inclination angle of the slope in a range between the position C and the position D illustrated in FIG. 3 is set to be larger than an inclination angle of the slope in a range between the position B and the position C.

In contrast, when it is premised that the vehicle door 2 is opened with a maximum opening degree, it is sometimes advantageous that the vehicle door 2 be not urged in the direction of closing the vehicle door 2. Therefore, under a state in which the adjusting block 10 retreats from the check link 5, the sliding surface, specifically, the sliding surface in the range between the position D and the position E illustrated in FIG. 3, between the stopper member and the slope under a state in which the adjusting block 10 restricts movement of the door check 6 only to allow the door check 6 to move to a position determining the second length (L2) may be formed into a flat surface.

Meanwhile, in the case of the popping up of the vehicle door 2, it is advantageous that the vehicle door 2 be not urged in the direction of closing the vehicle door 2. Accordingly, the sliding surface, specifically, the sliding surface in the range between the position A and the position B illustrated in FIG. 3, of the check link 5 between the first slope to the one end 5a of the check link 5 may be formed into a flat surface.

As in this embodiment, it is preferred that the first slope and the second slope be formed on each of the two opposed sliding surfaces of the check link 5. That is, also on a sliding surface (lower sliding surface) opposite to the sliding surface (upper sliding surface) of the check link 5, the first slope 5c and the second slope 5d are formed at the same positions (corresponding positions) in the extending direction of the check link 5 as the positions of the first slope 5c and the second slope 5d on the upper sliding surface. However, the first slope 5c and the second slope 5d exert effects even when the first slope 5c and the second slope 5d are formed on any one of the upper sliding surface and the lower sliding surface. When one slope is formed at a predetermined position, a reaction force is applied from the slope to the pressing member, and has a component of a force of shifting a position of the pressing member 8 to the one end 5a side of the check link 5. The component of the force always urges the vehicle door 2 in the direction of closing the vehicle door 2.

This application claims the benefit of priority from Japanese Patent Application No. 2014-175773, filed on August 29, 2014, the content of which is incorporated herein by reference.

### Reference Signs List

- 1: vehicle
- 2: vehicle door
- 3: body
- 4: pivot axis
- 5: check link
- 6: door check
- 7: stopper member
- 8: pressing member
- 9: elastic member
- 10: opening degree adjustment block

## Claims

1. An opening degree adjustment device for a vehicle door, comprising:
a door check comprising a pressing member and being fixed to a vehicle door mounted to a vehicle body so as to be pivotable;
a check link comprising:
a sliding surface to be pressed by the pressing member;
one end being supported on the vehicle body so as to be pivotable; and
another end having a stopper member mounted thereon,
the check link being movable relative to the door check within a predetermined movable range of the check link between the one end of the check link and the another end of the check link under a state in which the sliding surface is pressed by the pressing member; and
an opening degree adjustment block comprising a first checking region configured to restrict movement of the stopper member in a direction of the one end of the check link so as to enable the check link to move relatively to the door check within a range reduced from the predetermined movable range by a first length,
wherein the opening degree adjustment block is movable between a first state in which the opening degree adjustment block retreats to a position away from the check link to enable the check link to move relative to the door check within the predetermined movable range, and a second state in which the first checking region of the opening degree adjustment block is fitted on a portion of the check link within the predetermined movable range, and the opening degree adjustment block restricts movement of the check link in the direction of the one end of the check link, to thereby enable the check link to move relative to the door check within the range reduced from the predetermined movable range by the first length, and
wherein the sliding surface of the check link comprises a first slope slanting down to the one end side of the check link from a portion of the check link pressed by the pressing member when the opening degree adjustment block restricts the relative movement of the check link in the direction of the one end of the check link in the second state.

2. An opening degree adjustment device for a vehicle door according to claim 1,
wherein the opening degree adjustment block further comprises a second checking region configured to restrict movement of the stopper member in the direction of the one end of the check link so as to enable the check link to move relative to the door check within a range reduced from the predetermined movable range by a second length smaller than the first length,
wherein the opening degree adjustment block is further movable into a third state in which the second checking region of the opening degree adjustment block is fitted on a portion of the check link within the predetermined movable range, and the opening degree adjustment block restricts movement of the check link in the direction of the one end of the check link, to thereby enable the check link to move relative to the door check within the range reduced from the predetermined movable range by the second length, and
wherein the sliding surface of the check link comprises a second slope slanting down to the one end side of the check link and extending from a portion of the check link pressed by the pressing member when the opening degree adjustment block restricts the relative movement of the check link in the direction of the one end of the check link in the third state, to a portion of the check link pressed by the pressing member in the second state.

3. An opening degree adjustment device for a vehicle door according to claim 2,
wherein, in the first state, the vehicle door is set to be openable and closable between a fully opened state and a fully closed state,
wherein, in the third state, the vehicle door is set to be openable at an angle smaller than an angle in the fully opened state, and
wherein, in the second state, the vehicle door is set to be openable at an angle further smaller than the angle in the third state.

4. An opening degree adjustment device for a vehicle door according to any one of claims 1 to 3, wherein the check link comprises a flat surface between the first slope and the one end of the check link.

5. An opening degree adjustment device for a vehicle door according to any one of claims 1 to 4,
wherein the check link comprises another sliding surface on an opposite side of the sliding surface that slides while being pressed by the pressing member,
wherein the pressing member is capable of pressing the sliding surface and the another sliding surface from both sides of the check link so as to sandwich both of the sliding surface and the another sliding surface, and
wherein the first slope and the second slope are formed on the another sliding surface at the same positions in an extending direction of the check link as positions of the first slope and the second slope on the sliding surface.
